# EUROPÄISCHE PATENTANMELDUNG

(11) **EP 4 160 365 A1**
(43) Veröffentlichungstag der Anmeldung: **05.04.2023**
(21) Anmeldenummer: 21200167.1
(22) Anmeldetag: 30.09.2021
(51) Int. Cl.: G06F 3/0354, G06F 1/26

(54) **KABELLOSE COMPUTER-MAUS**

(71) Anmelder: Siemens Aktiengesellschaft, 80333 München (DE)
(72) Erfinder: Regnat, Nikolaus, 81827 München (DE); Reitzer, Guillaume, 91052 Erlangen (DE); Telschig, Kilian, 81543 München (DE); Wand, Johannes, 37351 Helmsdorf (DE); Weiss, Johannes, 96170 Lisberg (DE)
(74) Vertreter: Siemens Patent Attorneys

(57) **Zusammenfassung**

Um eine kabellose Computer-Maus in Einsatzsituationen, wo die Stromversorgung nicht sichergestellt ist, einsetzen zu können, wird es vorgeschlagen, die kabellose Computer-Maus (CMₖₗ), die einem wiederaufladbaren Energiespeicher, einem sogenannten Akkumulator (AKM), zur Stromversorgung der Computer-Maus (CMₖₗ) enthält, (i) mit wärmeleitfähigem Gehäusematerial (GHM_{wl}) zu versehen, aus dem zumindest von einer Handflächenauflage (HFA), einer Rechte-Maustaste-Fläche (RMTF) und einer Linke-Maustaste-Fläche (LMTF) als Teilbereiche eines Gehäuseoberteils (GHOT) der Computer-Maus (CMₖₗ) mindestens ein Teilbereich besteht, und (ii) mit mindestens einem auf einem thermo-elektrischen Effekt, sogenannter Seebeck-Effekt, basierenden Thermoelement (THE) zu versehen, das mit dem wärmeleitfähigen Gehäusematerial (GM_{wl}) in der Computer-Maus (CMₖₗ) auf einer Gehäuseinnenseite des jeweiligen Teilbereichs von dem Gehäuseoberteil (GHOT) im Sinne der Herstellung einer Wärmeleitung kraftschlüssig verbunden ist und mit dem Akkumulator (AKM) eine Schaltungsanordnung zum Aufladen des Akkumulators (AKM) gemäß einer durch den thermo-elektrischen Effekt erzeugten Ladespannung bildet.

## Beschreibung

Die Erfindung bezieht sich auf eine kabellose Computer-Maus gemäß dem Oberbegriff des Patentanspruches 1.

Eine kabellose Computer-Maus benötigt im Gegensatz zu einer kabelgebundenen Computer-Maus, die in der Regel über ein "Universal Serial Bus <USB>"-Kabel mit einem Computer, z.B. einem Desktop-Personal Computer, einem Notebook, einem Tablet etc., verbunden ist, eine Stromversorgung.

Bisher wird die Energie für kabellose Computer-Mäuse über Primär-Zellen basierte Energiespeicher, wie Batterien, oder über Sekundär-Zellen basierte Energiespeicher, wie Akkumulatoren, bereitgestellt. Hierbei müssen die Batterien regelmäßig getauscht oder die Akkumulatoren aufgeladen werden.

Dabei kann es passieren, dass man die Maus in einem Moment benutzen möchte, wo die Stromversorgung nicht sichergestellt ist, weil z.B. die Batterie oder der Akkumulator leer ist.

Die der Erfindung zugrundeliegende Aufgabe besteht darin, eine kabellose Computer-Maus anzugeben, die in Einsatzsituationen, wo die Stromversorgung nicht sichergestellt ist, eingesetzt werden kann.

Diese Aufgabe wird ausgehend von der im Oberbegriff des Patentanspruchs 1 definierten kabellosen Computer-Maus durch die im Kennzeichen des Patentanspruches 1 angegebenen Merkmale gelöst.

Die der Erfindung gemäß dem unabhängigen Anspruch 1 zugrundeliegende Idee besteht darin, eine kabellose Computer-Maus, die einem wiederaufladbaren Energiespeicher, einem sogenannten Akkumulator, zur Stromversorgung der Computer-Maus enthält, (i) mit wärmeleitfähigem Gehäusematerial zu versehen, aus dem zumindest von einer Handflächenauflage, einer Rechte-Maustaste-Fläche und einer Linke-Maustaste-Fläche als Teilbereiche eines Gehäuseoberteils der Computer-Maus mindestens ein Teilbereich besteht, und (**ii**) mit mindestens einem auf einem thermo-elektrischen Effekt, sogenannter Seebeck-Effekt, basierenden Thermoelement zu versehen, das mit dem wärmeleitfähigen Gehäusematerial in der Computer-Maus auf einer Gehäuseinnenseite des jeweiligen Teilbereichs von dem Gehäuseoberteil im Sinne der Herstellung einer Wärmeleitung kraftschlüssig verbunden ist und mit dem Akkumulator eine Schaltungsanordnung zum Aufladen des Akkumulators gemäß einer durch den thermo-elektrischen Effekt erzeugten Ladespannung bildet.

Das thermo-elektrische-Prinzip mit dem Seebeck-Effekt, was gemäß der Idee der Erfindung zugrunde liegt, ist also solches bekannt und ermöglicht die Umwandlung von Temperaturdifferenzen in Elektrizität (Thermoelektrizität). Das Thermoelement greift dazu menschliche Körperwärme auf einer Gehäuseoberfläche der Computer-Maus ab, um diese dann zur Stromversorgung der Computer-Maus zu nutzten. Zu diesem Zweck bestehen zumindest die Bereiche der Gehäuseoberfläche der Computer-Maus, die bei der Nutzung der Computer-Maus (also im Mausbetrieb) in Kontakt mit einer menschlichen Hand kommen (dies sind insbesondere die Handflächenauflage, die Rechte-Maustaste-Fläche und die Linke-Maustaste-Fläche als Teilbereiche eines Gehäuseoberteils der Computer-Maus), aus dem wärmeleitfähigen Gehäusematerial, welches in der Lage ist, Wärme schnell aufzunehmen und abzugeben, wie es vorzugsweise (vgl. Anspruch 2) ein metallisches Material kann.

Da ein Temperaturanstieg durch die menschliche Wärme jedoch nur sehr langsam erfolgen würde (gleiches gilt im Übrigen für einen Temperaturabstieg, wenn keine Hand mehr die Computer-Maus berührt), müsste die als Thermomaus ausgebildete Computer-Maus einen geringfügig dimensionierten Energiespeicher oder Akkumulator enthalten, welcher die bereitgestellte Energie und gegebenenfalls auch überschüssige Energie zwischenspeichert und Schwankungen im Leistungsbedarf der Computer-Maus ausgleichen kann.

Mit der Nutzung von menschlicher Abwärme können Computer-Mäuse ohne externe Energieversorgung betrieben werden, woraus sich die Kosten für Stromversorgung oder Materialaufwendungen für Batterien verringern.

Darüber hinaus wird die Usability der Computer-Maus erhöht, weil der Nutzer sich nicht mehr um die Energieversorgung kümmern muss - diese erfolgt im laufenden Betrieb.

Vorteilhafte Weiterbildungen dieser Idee sind in den Unteransprüchen angegeben.

So ist gemäß Anspruch 2 von Vorteil, wenn das wärmeleitfähige Gehäusematerial metallisch ist.

Darüber hinaus ist es gemäß Anspruch 3 vorteilhaft, wenn das Thermoelement ein Peltier-Modul der Serie "TEC1" ist (vgl. https://de.wikipedia.org/wiki/Peltier-Element), das die menschlichen Körperwärme an der Gehäuseoberfläche der Computermaus abgreift und in die Ladespannung zur Stromversorgung der Computer-Maus umwandelt.

Hierzu eine kurze Erläuterung:
- Der Energieverbrauch einer kabellosen Computer-Maus beträgt ca. 0,3 bis 0,7 Watt (vgl. https://www.thehomehacksdiy.com/how-much-power-watts-does-a-mouse-use-full-review/).
- Die maximale Wärme-Leistung eines Peltier-Moduls liegt bei etwa 44,7 Watt (vgl. www.conrad.de/de/p/tru-components-tecl-127050-peltier-element-15-4-v-dc-5-a-44-7-w-1-x-b-x-h-40-x-40-x-3-9-mm-1571721.html).
- Bei einer maximale Temperatur-Differenz von 67 °C bedeutet dies, dass bei einer Temperaturdifferenz von 67 °C eine Leistungsabgabe von 44,7 Watt erfolgt. Umgerechnet wird also bei 1 °C Temperaturänderung 0,67 Watt erzeugt.
- Der meiste Strom wird bei Nutzung der Computer-Maus benötigt, wobei sie sich auf Körperwärme aufheizt. Nach Benutzung kühlt sie sich wieder ab, wobei die entstehende Temperaturdifferenz auch wieder zu Erzeugung von Strom genutzt werden kann.
- Beispiel: Weist die menschlichen Hand eine Temperatur von 30 °C auf (vgl. https://www.therm-ic.com/de/blog/5-wissenswerte-fakten-zur-thermoregulation-des-koerpers-n22) und hat die Computer-Maus eine Temperatur von 20 °C (Es wurde hier ein Wert von 20 °C gewählt, weil die durchschnittliche Zimmertemperatur in diesem Bereich liegt.), so besteht eine Temperatur-Differenz von 10 °C und es kommt zu einer Leistungsabgabe des Peltier-Moduls von 6,7 Watt.

Ein Peltier-Modul wäre also in der Lage eine ausreichende Leistungsversorgung für eine kabellose Computer-Maus zu gewährleisten. Da - wie bereits erwähnt - der Temperaturanstieg bzw. -abstieg jedoch nur sehr langsam erfolgen würde, müsste der Energiespeicher bzw. Akkumulator Computer-Maus aus einen entsprechend geringfügig dimensioniert werden, um ggf. auch überschüssige Energie zwischenzuspeichern. Auf diese Weise lassen sich Schwankungen im Leistungsbedarf der Computer-Maus ausgleichen.

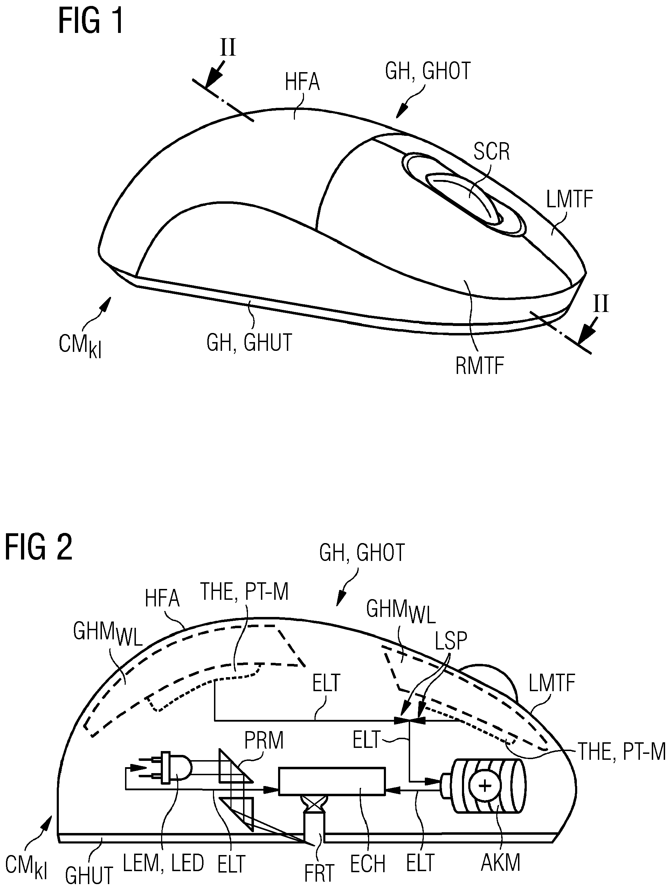

Schätzungsweise berührt die menschliche Hand die Maus mit ca. 45 cm². Falls das Peltier-Modul, wie im angegebenen Fall nur 16 cm² groß ist, könnten wie in FIGUR 2 zu sehen ist, mehrere Peltier-Module verbaut werden.

Weiterhin ist es gemäß Anspruch 4 von Vorteil, wenn das Thermoelement mit dem wärmeleitfähigen Gehäusematerial zur kraftschlüssigen Verbindung verklebt ist.

Weitere Vorteile der Erfindung ergeben sich aus der nachfolgenden Beschreibung eines Ausführungsbeispiels der Erfindung anhand der FIGUREN 1 und 2 erläutert. Es zeigen:
FIGUR 1 eine perspektivische Formansicht einer kabellose Computer-Maus,
FIGUR 2 einen Schnitt durch die kabellose Computer-Maus in der FIGUR 1 entlang der strichpunktierten Schnittlinie mit einer Prinzipdarstellung des inneren Aufbaus der kabellose Computer-Maus.
FIGUR 1 zeigt eine perspektivische Äußere-Form-Ansicht einer kabellose Computer-Maus CMₖₗ. Gemäß dieser Ansicht dargestellt sind typische Bedienungs- und Funktionsmerkmale der kabellosen Computer-Maus CMₖₗ, die am oder auf einem Gehäuse GH mit einem Gehäuseoberteil GHOT und einem Gehäuseunterteil GHUT angeordnet sind. Im Einzelnen sind dies eine Handflächenauflage HFA, eine Linke-Maustastenfläche LMTF, eine Rechte-Maustastenfläche RMTF sowie ein zwischen den beiden Maustastenflächen LMTF, RMTF angeordnetes Scrollrad SCR.

Die aufgeführten Bedienungs- und Funktionsmerkmale haben eine Gemeinsamkeit:
Sie werden in Situationen, wo die kabellose Computer-Maus CMₖₗ zur Bedienungssteuerung eines Computers, wie einem Desktop-Personal Computer, einem Notebook, einem Tablet etc., zum Einsatz kommt, von einer menschlichen Hand kurzzeitig und/oder für eine längere Zeit berührt. Bei dieser jeweiligen Berührung hat die die kabellose Computer-Maus CMₖₗ eine Umgebungstemperatur, also die Temperatur einer Computer-Maus-Umgebung, und die menschliche Hand hat eine personenspezifische Hand-(Körper-)Temperatur, die gewöhnlich voneinander abweichen. Dieser Umstand bildet nun den Ausgangspunkt für die weiteren Betrachtungen im Zuge des Ausführungsbeispiels der Erfindung anhand von FIGUR 2.

FIGUR 2 zeigt einen Schnitt durch die kabellose Computer-Maus CMₖₗ in der FIGUR 1 entlang der strichpunktierten Schnittlinie mit einer Prinzipdarstellung des inneren Aufbaus der kabellose Computer-Maus CMₖₗ. Zu diesem inneren Aufbau der kabellose Computer-Maus CMₖₗ gehören neben einem wiederaufladbaren Energiespeicher, einem sogenannten Akkumulator AKM, zur Stromversorgung der Computer-Maus CMₖₗ Schaltungs- und Steuerungskomponenten, wie Elektronik-Chips ECH, Foto-Rezeptoren FRT, Prismen PRM, Lichtelemente LEM, z.B. LED's, und Elektronik-Leitungen ELT, für die Umsetzung der Bedienungssteuerung des Computers sowie mindestens ein auf einem thermo-elektrischen Effekt, sogenannter Seebeck-Effekt, basierendes Thermoelement THE, um den vorstehend erwähnten Umstand einer bestehenden Temperaturdifferenz bei der Berührung der Computer-Maus CMₖₗ mit der menschlichen Hand auszunutzen. Das Thermoelement THE ist dabei vorzugsweise ein Peltier-Modul PT-M der Serie "TEC1" (vgl. https://de.wikipedia.org/wiki/Peltier-Element).

Um den thermo-elektrischen Effekt des Thermoelements THE bzw. des Peltier-Moduls PT-M optimal auszunutzen, weist die Computer-Maus CMₖₗ wärmeleitfähiges Gehäusematerial GHM_{wl} auf. Dieses Gehäusematerial GHM_{wl} befindet sich bevorzugt auf dem Gehäuseoberteil GHOT der Computer-Maus CMₖₗ und insbesondere in solchen Teilbereichen des Gehäuseoberteils GHOT, die mit der menschlichen Hand in Berührung kommen. Dies sind die Handflächenauflage HFA, die Rechte-Maustaste-Fläche RMTF und die Linke-Maustaste-Fläche LMTF. Es ist aber auch möglich und vorstellbar, dass nur ein oder ganz allgemein mindestens ein Teilbereich der explizit genannten Flächen das wärmeleitfähige Gehäusematerial GHM_{wl} aufweist.

Das jeweilige Thermoelement THE bzw. Peltier-Modul PT-M ist mit dem wärmeleitfähigen Gehäusematerial GM_{wl} im Zuge einer optimalen Ausnutzung und Wirksamkeit des thermo-elektrischen Effekts auf einer Gehäuseinnenseite des jeweiligen Teilbereichs von dem Gehäuseoberteil GHOT im Sinne der Herstellung einer Wärmeleitung kraftschlüssig verbunden. Durch diese wärmeleitende, kraftschlüssige Verbindung wird von dem Thermoelement THE bzw. Peltier-Modul PT-M aufgrund des thermo-elektrischen Effekts eine Ladespannung LSP erzeugt, die zum Aufladen des Akkumulators AKM genutzt werden kann. Um das zu erreichen, bildet das Thermoelement THE bzw. Peltier-Modul PT-M mit dem Akkumulator AKM eine entsprechende Schaltungsanordnung, die in der FIGUR 2 nicht im Detail dargestellt (sondern nur angedeutet ist), und sie wird im Folgenden auch nicht explizit angegeben, weil sie dem Fachmann allgemein geläufig ist.

Das wärmeleitfähige Gehäusematerial GM_{wl} ist dabei vorzugsweise metallisch und die kraftschlüssige Verbindung zwischen dem Thermoelement THE und dem wärmeleitfähigen Gehäusematerial GM_{wl} wird durch Verkleben erreicht.

## Patentansprüche

1. Kabellose Computer-Maus (CMₖₗ), mit einem wiederaufladbaren Energiespeicher, einem sogenannten Akkumulator (AKM), zur Stromversorgung der Computer-Maus (CMₖₗ),
**gekennzeichnet durch**
- wärmeleitfähiges Gehäusematerial (GHM_{wl}), aus dem zumindest von einer Handflächenauflage (HFA), einer Rechte-Maustaste-Fläche (RMTF) und einer Linke-Maustaste-Fläche (LMTF) als Teilbereiche eines Gehäuseoberteils (GHOT) der Computer-Maus (CMₖₗ) mindestens ein Teilbereich besteht,
- mindestens ein auf einem thermo-elektrischen Effekt, sogenannter Seebeck-Effekt, basierendes Thermoelement (THE), das mit dem wärmeleitfähigen Gehäusematerial (GM_{wl}) in der Computer-Maus (CMₖₗ) auf einer Gehäuseinnenseite des jeweiligen Teilbereichs von dem Gehäuseoberteil (GHOT) im Sinne der Herstellung einer Wärmeleitung kraftschlüssig verbunden ist und mit dem Akkumulator (AKM) eine Schaltungsanordnung zum Aufladen des Akkumulators (AKM) gemäß einer durch den thermo-elektrischen Effekt erzeugten Ladespannung bildet.

2. Kabellose Computer-Maus (CMₖₗ) nach Anspruch 1, **dadurch gekennzeichnet, dass**
das wärmeleitfähige Gehäusematerial (GM_{wl}) metallisch ist.

3. Kabellose Computer-Maus (CMₖₗ) nach Anspruch 1 oder 2, **dadurch gekennzeichnet, dass**
das Thermoelement (THE) ein Peltier-Modul (PT-M) der Serie "TEC1" ist.

4. Kabellose Computer-Maus (CMₖₗ) nach einem der Ansprüche 1 bis 3, **dadurch gekennzeichnet, dass**
das Thermoelement (THE) mit dem wärmeleitfähigen Gehäusematerial (GM_{wl}) zur kraftschlüssigen Verbindung verklebt ist.
